(19) Europäisches Patentamt
European Patent Office
Office européen des brevets

(11) **EP 2 660 947 B1**

(12) **EUROPEAN PATENT SPECIFICATION**

(45) Date of publication and mention
of the grant of the patent:
**17.08.2016 Bulletin 2016/33**

(51) Int Cl.:
*H02J 7/02* *(2006.01)*     *H01M 10/44* *(2006.01)*
*H02J 7/00* *(2006.01)*

(21) Application number: **11852921.3**

(22) Date of filing: **26.12.2011**

(86) International application number:
**PCT/JP2011/007267**

(87) International publication number:
**WO 2012/090473 (05.07.2012 Gazette 2012/27)**

(54) **BATTERY MODULE CHARGING SYSTEM**

BATTERIEMODUL-AUFLADESYSTEM

SYSTÈME DE CHARGEMENT DE MODULE ACCUMULATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2010 JP 2010294530**

(43) Date of publication of application:
**06.11.2013 Bulletin 2013/45**

(73) Proprietor: **Kawasaki Jukogyo Kabushiki Kaisha
Kobe-shi, Hyogo 650-8670 (JP)**

(72) Inventors:
• **KOMAI, Tomoyuki**
  **Hyogo 673-8666 (JP)**
• **KATAOKA, Mikihiko**
  **Hyogo 673-8666 (JP)**
• **HIGUMA, Katsutoshi**
  **Hyogo 673-8666 (JP)**
• **HAYASHI, Masato**
  **Hyogo 673-8666 (JP)**

(74) Representative: **Piésold, Alexander James
Dehns
St Bride's House
10 Salisbury Square
London EC4Y 8JD (GB)**

(56) References cited:
WO-A1-98/04025          JP-A- 9 084 274
JP-A- 2000 217 279      JP-A- 2005 237 155
JP-A- 2009 261 134      US-A- 5 631 537
US-A- 5 656 915         US-A1- 2007 145 946
US-A1- 2008 303 479     US-A1- 2011 260 681

## Description

### Technical Field

The present invention relates to a charging system configured to charge a battery module in which a plurality of cells are connected in series to each other, and particularly to a charging system configured to charge a plurality of cells forming a battery module such that the charging is performed for each cell.

### Background Art

Rechargeable single cells are single secondary batteries that are reusable by charging them. Generally speaking, a voltage at which such a single secondary battery can be charged is not higher than a few volts, which is low. For this reason, in a case where a high-voltage secondary battery is required, an assembled battery in which a plurality of single cells are connected in series to each other is adopted. It should be noted that a single cell is often referred to as a unit cell or simply referred to as a cell.

In the description herein, a single cell is referred to as a cell, and a rechargeable cell is simply referred to as a cell. Similarly, an assembled battery is often referred to as a battery pack, battery system, or battery module. In the description herein, an assembled battery is referred to as a battery module, and a rechargeable battery module is simply referred to as a battery module.

Charging systems configured to charge cells forming a battery module have been proposed by, for example, Patent Literatures 1 to 4 below.

Patent Literature 1 discloses a technique relating to a battery charger configured to charge a battery module such that the charging is performed for each cell. Specifically, both a charging device and a voltage monitoring device are provided for each cell, and charging of a cell is performed by the charging device in accordance with the voltage of the cell, the voltage being monitored by the voltage monitoring device.

Patent Literature 2 discloses a technique relating to a battery charger configured to charge battery modules such that charging is performed for each cell. Specifically, a charging device is provided for each cell; a voltage monitoring device is provided for each battery module; and charging of a cell to be charged is performed by the charging device in accordance with the voltage of the battery module including the cell, the voltage being monitored by the voltage monitoring device. Patent Literature 2 further discloses that a power supply for the charging devices is provided for each battery module. Although the power supply for the charging devices includes an insulating DC/DC converter so that the primary side and the secondary side are insulated from each other, the charging is not performed in the form of so-called contactless charging.

Patent Literature 3 discloses a technique in which a charging device and a charging control device are provided for each cell, and contactless charging is performed for each cell.

Patent Literature 4 discloses a technique in which a charging device and a voltage monitoring device are provided for each cell, and contactless charging is performed for each cell.

As described above, Patent Literatures 1 to 4 disclose: techniques relating to a battery charger configured to charge a plurality of cells forming a battery module such that the charging is performed for each cell; techniques relating to contactless charging; and techniques for performing charging control common to each cell. These techniques are not directed to a specific secondary battery such as a nickel-metal hydride battery or lithium ion battery. That is, the application of these techniques is not limited to a specific battery type. Moreover, the usage of battery modules to which these techniques are applied is as follows: Patent Literature 1 gives no description that limits the usage of the battery module; Patent Literature 2 gives an example in which the battery module is for use in emergency power supply or in a mobile unit; Patent Literature 3 gives an example in which the battery module is for use in a game controller or in a mobile phone; and Patent Literature 4 gives an example in which the battery module is for use in an electric automobile. It should be noted that, in these usages, the terminal voltage of each battery module is in a range from tens of volts to hundreds of volts at the highest. US 2007/0145946 A1 discloses an intelligent equalizing battering charger having equalising charging circuitry. US 5656915A discloses a power distribution unit for series connected multicell battery packs. US 5631537A discloses a battery charger device for charging a battery pack comprised of four lithium ion cells.

### Citation List

### Patent Literature

PTL 1: Japanese National Phase PCT Laid-Open Publication No. 2005-534276
PTL 2: Japanese Laid-Open Patent Application Publication No. 2005-151720
PTL 3: Japanese Laid-Open Patent Application Publication No. 2010-206871
PTL 4: Japanese Laid-Open Patent Application Publication No. 10-257682

### Summary of Invention

### Technical Problem

When a battery module including a plurality of cells is charged, there is a case where the state of charge (SOC) in the battery module becomes non-uniform. Specifically, in this case, there is an insufficiently charged cell in the battery module. Consequently, the usable capacity of the entire battery module is reduced and the terminal voltage of the insufficiently charged cell is low, which results in performance degradation of the entire battery module.

There are methods to eliminate such a non-uniform state of charge of the cells in the battery module, such as: a method in which the entire battery module is overcharged and thereby the terminal voltages of the respective cells in the battery module are equalized (this method is hereinafter referred to as an overcharging method); a method in which a low-voltage cell is removed from the battery module and the cell is charged (this method is hereinafter referred to as a cell charging method); and a method in which the cells in the battery module are charged such that the charging is performed for each cell (i.e., the method relating to the techniques disclosed by Patent Literatures 1 to 4).

The overcharging method has problems, for example, in that the method overcharges even a normally operating cell, causing an increase in the internal resistance of the cell and a decrease in the charging capacity of the cell, resulting in that the life of the battery module is reduced. In the case of the cell charging method, the battery module needs to be disassembled in order to remove an insufficiently charged cell from the battery module. This is troublesome and time-consuming. Further, if this method is applied to a battery module having a sealed structure, there is a risk that the sealed structure becomes broken at the time of disassembling, and that leakage of alkaline electrolyte solution is caused. For these reasons, it has been difficult to adopt the overcharging method and the cell charging method as measures for eliminating a non-uniform state of charge of the cells in the battery module.

Meanwhile, in the case of the techniques disclosed in Patent Literatures 1 to 4, a charging device is necessary for each cell (Patent Literatures 1 to 4), and a control circuit for controlling the charging is necessary for each cell (Patent Literatures 1, 3, and 4). Accordingly, the same number of charging devices as the number of cells in the battery module is necessary, and the same number of control circuits as the number of cells in the battery module is necessary. As a result, the number of components increases, and wiring becomes complex due to the increase in the number of components. Thus, there is a problem that the charging system becomes complex and expensive.

Further, in the case of a battery module in which voltage variation relative to SOC variation is small, such as a nickel-metal hydride battery, there is a problem that precise charging control is necessary in order to uniformly charge the cells in the battery module.

The present invention has been made to solve the above problems. An object of the present invention is to simplify the configuration of a charging system capable of uniformly and stably charging a plurality of (a large number of) cells forming a battery module.

## Solution to Problem

In order to solve the above problems, a battery module charging system according to the present invention includes: a power transmitting device including a primary coil, the primary coil being configured to transmit AC power; a power receiving unit including a secondary coil, the secondary coil being configured to receive the AC power transmitted from the primary coil by electromagnetic induction, the power receiving unit being configured to convert the received AC power into DC power; and a selection circuitry for use in selectively charging a plurality of cells in a battery module with the DC power, the plurality of cells in the battery module being connected in series to each other, the plurality of cells being secondary batteries; a plurality of charging wirings for use in charging the plurality of respective cells in the battery module, the plurality of charging wiring extending from the selection circuitry; a state monitoring apparatus configured to monitor state signals, each of the state signals indicating a state of one of the plurality of cells in the battery module; a plurality of signal wirings extending from the plurality of respective cells in the battery module to the state monitoring apparatus, the state signals being transmitted to the state monitoring apparatus through the plurality of respective signal wirings; and a charging control circuit disposed between the power receiving unit and the selection circuitry; characterised in that a positioning mechanism is configured to allow the power transmitting device to be detachably attached to the power receiving unit, and to position the primary coil and the secondary coil such that the primary coil and the secondary coil are allowed to be electromagnetically coupled to each other when the power transmitting device is attached to the power receiving unit; the selection circuitry is configured to select one of the plurality of cells in the battery module and charge the selected cell with the DC power, the charging control circuit is configured to control a start and an end of charging of the one of the plurality of cells in accordance with the state signal, the state signal being monitored by the state monitoring apparatus, the plurality of charging wirings are respectively connected to the selection circuitry and non-end portions of the plurality of signal wirings; and a charging current flowing to each cell flows through a portion of the signal wiring, the portion of the signal wiring extending between the cell and the connected non-end portion of the signal wiring.

According to the above configuration, the selection circuitry enables all the cells in the battery module to be charged. Consequently, although only one cell in the battery module can be charged at one time, the costs of and the area occupied by equipment necessary for charging all the cells in the battery module can be suppressed, and thus space and cost saving can be realized.

Moreover, the primary coil of the power transmitting device and the secondary coil of the power receiving unit are electrically separated from each other. Therefore, insulation can be readily obtained. That is, the necessity of taking account of the earth potential of each cell in the battery module or in a battery stack in which a plurality of the battery modules are connected in series is eliminated.

Furthermore, the battery module charging system includes the positioning mechanism configured to position the primary coil and the secondary coil such that the primary coil and the secondary coil are allowed to be electromagnetically coupled to each other when the power transmitting device is attached to the power receiving unit. As a result, a magnetic flux generated by the primary coil can be linked with the secondary coil without waste, and the efficiency of power transmission from the power transmitting device to the power receiving unit can be improved.

As described above, the configuration of the charging system capable of uniformly and stably charging a plurality of (a large number of) cells forming a battery module can be simplified. In addition, since the positioning mechanism is configured such that the power transmitting device is detachable from the power receiving unit, the power transmitting device can be shared by a plurality of the battery modules.

In the battery module charging system, a plurality of the battery modules may be connected in series to each other, and each of the battery modules may include the power receiving unit, the positioning mechanism, and the selection circuitry. The battery module charging system may include the single power transmitting device for the plurality of the battery modules.

According to the above configuration, the power transmitting device is detachable from the power receiving unit. Therefore, in a case where a plurality of the battery modules are connected in series to each other to form a battery stack, it is necessary for the power receiving unit to be provided for each battery module; however, only one power transmitting device is necessary for the entire battery stack. Accordingly, the number of power transmitting devices and the number of excitation power supplies that supply electric power to the power transmitting devices can be reduced, which makes it possible to readily reduce the size and costs of the entire charging system.

In the above battery module charging system, the power receiving unit may include an insulator disposed between the secondary coil and an air gap, the air gap being formed between the primary coil and the secondary coil.

According to the above configuration, the insulator is, for example, a high-voltage insulating film affixed to an acrylic sheet. By replacing the insulator with a different one, dielectric strength can be readily adjusted as desired.

According to the present invention, a portion of each signal wiring, which extends between the cell and a connection at which the signal wiring is connected to the charging wiring, is an overlapping portion where the signal wiring and the charging wiring overlap each other. The overlapping portion is used both for transmitting the state signal corresponding to the cell and for charging the cell. Thus, the wiring of the entire charging system can be simplified.

The above battery module charging system may further include a correction circuit configured to correct a terminal voltage of each of the cells in accordance with a voltage drop, the terminal voltage of each of the cells being transmitted to the state monitoring apparatus as the state signal, the voltage drop occurring when a charging current flowing to the cell flows through a portion of the signal wiring, the portion of the signal wiring extending between the cell and a connection at which the signal wiring is connected to the charging wiring.

According to the above configuration, a voltage drop occurs when a charging current flowing to the cell flows through the overlapping portion where the charging wiring and the signal wiring overlap each other, which causes an error in measuring the terminal voltage of the cell, the error affecting the state signal corresponding to the cell. However, the measurement result of the terminal voltage of the cell is corrected in accordance with the voltage drop. This makes it possible to precisely control the start and end of charging of the cell in accordance with the corrected measurement result of the terminal voltage of the cell.

In the above battery module charging system, the cells may be nickel-metal hydride batteries.

According to the above configuration, for example, since a nickel-metal hydride battery has a characteristic that its voltage variation relative to SOC variation is small in a normal operating voltage range, the start and end of the cell charging can be precisely controlled by precisely measuring the terminal voltage of the nickel-metal hydride battery.

The above object, other objects, features, and advantages of the present invention will be made clear by the following detailed description of preferred embodiments with reference to the accompanying drawings.

**Advantageous Effects of Invention**

According to the present invention, the configuration of the charging system capable of uniformly and stably charging a plurality of (a large number of) cells forming a battery module can be simplified.

**Brief Description of Drawings**

[Fig. 1A] Fig. 1A shows an example of the configuration of a single battery module.
[Fig. 1B] Fig. 1B shows an example of the configuration of a battery stack formed by using a plurality of battery modules.

[Fig. 2] Fig. 2 shows an example of the configuration of a battery module charging system according to the present invention.

[Fig. 3A] Fig. 3A illustrates a structural example of a main part of a non-contact charging device according to the present invention.

[Fig. 3B] Fig. 3B illustrates a structural example of the main part of the non-contact charging device according to the present invention.

[Fig. 3C] Fig. 3C illustrates a structural example of the main part of the non-contact charging device according to the present invention.

[Fig. 4] Fig. 4 shows an example of the configuration of a state monitoring apparatus according to present invention.

[Fig. 5] Fig. 5 is a flowchart showing an example of a processing flow when inspection work is performed on the battery stack according to the present invention.

[Fig. 6A] Fig. 6A shows a state of the entire charging system when an odd-numbered cell in the battery module is charged.

[Fig. 6B] Fig. 6B shows a state of the entire charging system when an even-numbered cell in the battery module is charged.

[Fig. 7] Fig. 7 is an SOC characteristic diagram showing voltage variations in different types of electrical storage devices relative to SOC.

[Fig. 8A] Fig. 8A illustrates a state of a cell selection circuit while charging of a cell to be charged is stopped.

[Fig. 8B] Fig. 8B illustrates a state of the cell selection circuit while charging of the cell to be charged is being performed.

[Fig. 9] Fig. 9 illustrates a state of the cell selection circuit when a cell at one of both ends of the battery module is charged.

**Description of Embodiments**

Hereinafter, embodiments of the present invention are described with reference to the accompanying drawings. In the drawings, the same or corresponding components are denoted by the same reference signs, and a repetition of the same description is avoided.

<Battery Module Configuration>

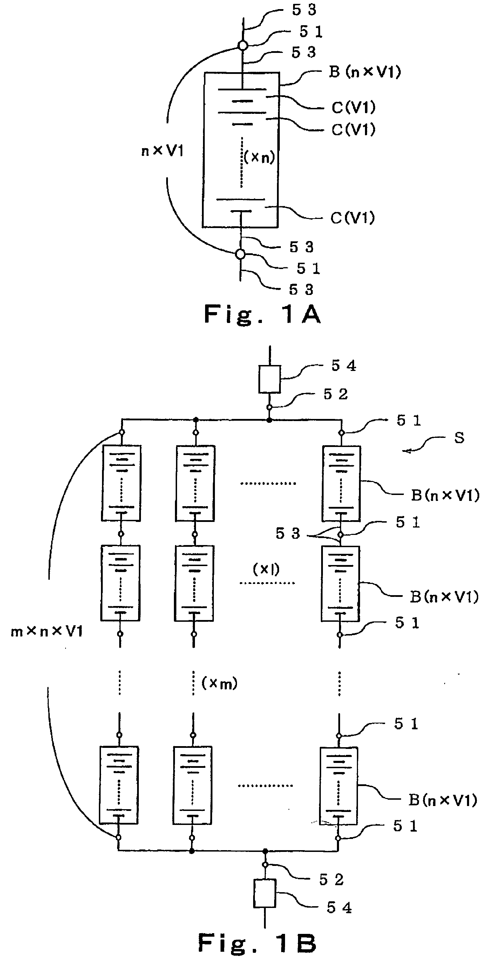

One mode of a battery module according to the present invention is described below with reference to Fig. 1A and Fig. 1B. Fig. 1A shows an example of the configuration of a single battery module, and Fig. 1B shows an example of the configuration of a battery stack formed by using a plurality of battery modules.

A battery module B shown in Fig. 1A is formed by connecting n (natural number) cells C in series to each other, each of which is capable of charging and discharging and has an output voltage of V1. The battery module B shown in Fig. 1A adopts a stack-type secondary battery structure, in which electrical connection between two adjacent cells C is realized by direct physical contact between the positive electrode of one cell C and the negative electrode of the other cell C. Therefore, wiring for connecting two adjacent cells C is eliminated in Fig. 1A.

It should be noted that a heat sink for use in radiating heat generated by cells C may be interposed between two adjacent cells C. For example, the heat sink is formed by using an electrically conductive metal plate, and is preferably formed by using a nickel-plated aluminum plate. The heat sink is provided with air flowing holes, and radiates heat by means of air from a fan or the like. The heat sink is formed by using a material that allows two adjacent cells C to be electrically connected to each other.

After assembling the battery module B by stacking the cells C, the battery module B may be fastened by bolts such that the cells C are sealed up. In this manner, the battery module B may have a sealed structure. By having such a sealed structure, a risk of electrolyte solution leakage is eliminated, and the necessity of replenishment of the electrolyte solution is eliminated. Thus, the battery module B can be made maintenance-free.

Both ends of the battery module B are connected to respective module-connecting terminals 51 via cables 53 so that a battery stack S, which will be described below, can be formed by using a plurality of battery modules B. It should be noted that the number, n, of cells C forming the battery module B varies according to the usage and specifications of the battery module B. In the present embodiment, the number n of cells C forming the battery module B is 30. Therefore, if the output voltage V1 of the cell C is 1.2 V, then the output voltage ($n \times V1$) of the battery module B is 36 V.

The battery stack S shown in Fig. 1B is formed in the following manner: m (natural number) units of battery modules B as shown in Fig. 1A are connected in series to each other to form a battery module group arranged in one line; and 1 (natural number) battery module groups are connected in parallel. That is, adjacent two battery modules B are connected to each other via the cable 53 and the module-connecting terminal 51. Both ends of the battery stack S are respectively connected to external devices such as breakers 54 via stack output terminals 52.

It should be noted that the number, m, of battery modules B connected in series and the number, 1, of battery modules B connected in parallel in the battery stack S are determined based on a working voltage and battery capacity that are required for the system. For example, in a railroad system, the battery stack S is used in power storage equipment for reusing regenerative electric power that is generated when an electric train decelerates; or in a natural energy power generation system, the battery stack S is used in power storage equipment for absorbing fluctuations in unstable power generation. In a case where the battery stack S is used in power storage equipment of a railroad system, the output voltage of the power storage equipment is, in general, DC 1500 V. In this case, if the output voltage V1 of the cell C is, for example, 1.2 V, then the number n of necessary cells C is 1250; and if the number n of cells C forming the battery module B is 30, then the number m of battery modules B connected in series in one line in the battery stack S is 42.

<Example of Configuration of Battery Module Charging System>

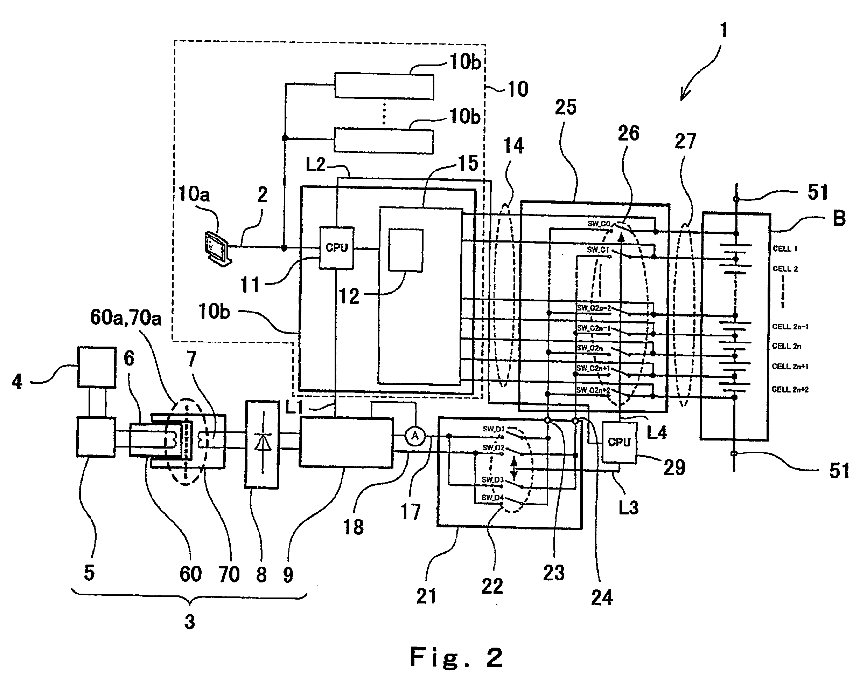

Fig. 2 shows an example of the configuration of a battery module charging system according to the present invention.

A charging system 1 shown in Fig. 2 is a system configured to charge the battery module B and includes a non-contact charging device 3, a state monitoring apparatus 10, a polarity selection circuit 21, a cell selection circuit 25, and a CPU 29.

The battery module B shown in Fig. 2 is formed by connecting a total of 2n+2 cells C to each other. The battery module B is connected in series via the module-connecting terminal 51 to another battery module B that is disposed at the front side of the battery module B (in Fig. 2, above the battery module B), and is connected in series via the module-connecting terminal 51 to another battery module B that is disposed at the rear side of the battery module B (in Fig. 2, below the battery module B). Thus, the battery stack S is formed. The positive electrode of each cell C is positioned toward the battery module B disposed at the front side, and the negative electrode of each cell C is positioned toward the battery module B disposed at the rear side. Hereinafter, for a clear explanation, it is assumed that identification numbers (1 to 2n+2) are allocated to the respective cells C in ascending order from the cell C nearest to the battery module B disposed at the front side to the cell C nearest to the battery module B disposed at the rear side.

The non-contact charging device 3 includes an excitation power supply 5, a power transmitting device 60 including a primary coil 6, a power receiving device 70 including a secondary coil 7, a rectifier 8, and a charging control circuit 9. The power receiving device 70 and the rectifier 8 form a power receiving unit.

When the excitation power supply 5 receives AC power supplied from an external power supply 4 such as a commercial power grid, the excitation power supply 5 outputs AC power having a high transmission frequency (e.g., 125 kHz). It should be noted that the transmission frequency is not limited to 125 kHz, but a suitable frequency is used according to the cells to be charged. In a state where the power transmitting device 60 is attached to the power receiving device 70 such that the primary coil 6 and the secondary coil 7 are allowed to be electromagnetically coupled to each other, when the high-frequency power from the excitation power supply 5 is supplied to the primary coil 6, the secondary coil 7 receives the AC power transmitted from the primary coil 6 by electromagnetic induction. The AC power received by the secondary coil 7 is converted by the rectifier 8 into DC power, and the DC power is supplied to the charging control circuit 9 as electric power for use in charging a cell in the battery module B to be charged. Since the circuit configuration of the charging control circuit 9 is well-known, a description of the circuit configuration of the charging control circuit 9 is omitted.

The charging control circuit 9 performs control to convert the DC power supplied from the rectifier 8, such that a voltage and a current suitable for the charging of the cell to be charged are obtained. A method used herein for charging the cell C is a constant voltage charging method, in which the charging is performed with a constant voltage. As an alternative method, a constant-current charging method may be used, in which the charging is performed with a constant current. As another alternative method, for example, a constant current-constant voltage charging method may be used, in which the charging is first performed with a constant current and then with a constant voltage.

The charging control circuit 9 also performs control to end the charging of the cell C to be charged when the voltage of the cell C has reached a predetermined voltage through the charging. Alternatively, the charging control circuit 9 may perform control to end the charging of the cell C to be charged when a predetermined period has elapsed after the start of the charging of the cell C or when the SOC of the cell C to be charged has reached a predetermined value, for example. It should be noted that a positive electrode side wiring 17 and a negative electrode side wiring 18 extend from the output side of the charging control circuit 9. The positive electrode side wiring 17 serves to form, via the polarity selection circuit 21 and the cell selection circuit 25, an electrical charging path at the positive electrode side of the cell C to be charged in the battery module B; and the negative electrode side wiring 18 serves to form, via the polarity selection circuit 21 and the cell selection circuit 25, an electrical charging path at the negative electrode side of the cell C to be charged in the battery module B.

The state monitoring apparatus 10 is an apparatus for monitoring the voltage of each cell C in the battery module B as the state of each cell C in the battery module B. The state monitoring apparatus 10 includes one main unit 10a and a plurality of auxiliary units 10b. One of the plurality of auxiliary units 10b is provided for each battery module B. The main unit 10a and each of the plurality of auxiliary units 10b are connected by a communication line 2. Each auxiliary unit 10b is an information processor which includes: a CPU 11; a measurement circuit 15 including an A/D converter 12; and a communication interface connected to the main unit 10a. The main unit 10a is an information processor which includes: a CPU; a memory; a communication interface connected to the plurality of auxiliary units 10b; and a display device configured to display battery monitoring results. The main unit 10a may be configured as a conventional personal computer with peripheral devices, for example.

The polarity selection circuit 21 and the cell selection circuit 25 are disposed between the charging control circuit 9 and the battery module B. The polarity selection circuit 21 and the cell selection circuit 25 are configured to select a cell to be charged from the cells C included in the battery module B, and to form a charging wiring path extending from the charging control circuit 9, through which the charging of the cell that has been selected to be charged is performed. Specifically, the polarity selection circuit 21 and the cell selection circuit 25 are configured as described below.

The polarity selection circuit 21 includes a total of four switches 22 including: two switches SW_D1 and SW_D3 each having its one end connected to the positive electrode side wiring 17 of the charging control circuit 9; and two switches SW_D2 and SW_D4 each having its one end connected to the negative electrode side wiring 18 of the charging control circuit 9. Preferably, the switches 22 are configured as semiconductor switches. It should be noted that the switch SW_D1 connected to the positive electrode side wiring 17 has its other end connected to a first terminal 23 of the cell selection circuit 25, and the switch SW_D4 connected to the negative electrode side wiring 18 has its other end connected to the first terminal 23 of the cell selection circuit 25. Also, the switch SW_D2 connected to the negative electrode side wiring 18 has its other end connected to a second terminal 24 of the cell selection circuit 25, and the switch SW_D3 connected to the positive electrode side wiring 17 has its other end connected to the second terminal 24 of the cell selection circuit 25. ON/OFF switching control of the four switches 22 is performed such that a pair of switches SW_D1 and SW_D3 as well as a pair of switches SW_D2 and SW_D4 are complementarily turned on and off based on commands from the CPU 29.

Here, assume a case where the switch SW_D1 out of the two switches SW_D1 and SW_D3 connected to the positive electrode side wiring 17 is turned on, and the switch SW_D2 out of the two switches SW_D2 and SW_D4 connected to the negative electrode side wiring 18 is turned on. In this case, the first terminal 23 of the cell selection circuit 25 is connected to the positive electrode side wiring 17 of the charging control circuit 9, and the second terminal 24 of the cell selection circuit 25 is connected to the negative electrode side wiring 18 of the charging control circuit 9.

On the other hand, assume a case where the switch SW_D3 out of the two switches SW_D1 and SW_D3 connected to the positive electrode side wiring 17 is turned on, and the switch SW_D4 out of the two switches SW_D2 and SW_D4 connected to the negative electrode side wiring 18 is turned on. In this case, the first terminal 23 of the cell selection circuit 25 is connected to the negative electrode side wiring 18 of the charging control circuit 9, and the second terminal 24 of the cell selection circuit 25 is connected to the positive electrode side wiring 17 of the charging control circuit 9. That is, through the switching control of the switches 22, the flow direction (i.e., polarity) of a charging current can be inverted at the first terminal 23 and the second terminal 24 of the cell selection circuit 25.

The cell selection circuit 25 includes a total of 2n+3 switches 26 including: switches SW_C0, SW_C2,..., SW_C2n, and SW_C2n+2, each of which has one end connected to the first terminal 23 and the other end connected to the positive electrode side of corresponding one of the odd-numbered cells 2k-1 (k = 1~n+1) or the negative electrode side of the final-numbered cell 2n+2 of the battery module B; and switches SW_C1, SW_C3,..., and SW_C2n+1, each of which has one end connected to the second terminal 24 and the other end connected to the positive electrode side of corresponding one of the even-numbered cells 2k (k = 1~n+1) of the battery module B. Preferably, the switches 26 are configured as semiconductor switches. That is, the number of switches 26 is greater, by one, than the number of cells C forming the battery module B.

The cell selection circuit 25 and the battery module B are connected by wirings 27. Specifically, one ends of the respective wirings 27 are connected to the switches 26 of the cell selection circuit 25, and the other ends of the respective wirings 27 are connected to contact ends formed between adjacent cells C in the battery module B and both ends of the entire module. The wirings 27 herein form part of charging wirings extending from the charging control circuit 9, through which the charging of cells to be charged in the battery module B is performed, and also form part of signal wirings, through which state signals indicating states of the respective cells C in the battery module B are transmitted to the state monitoring apparatus 10. As described above, the battery module B adopts a stack-type secondary battery structure, in which the contact end between two adjacent cells C is positioned at the positive electrode side of one cell C and the negative electrode side of the other cell C. If a heat sink is additionally interposed between the two adjacent cells C, the heat sink may be provided with a tap. In this case, the tap may serve as the contact end between the cells C.

The measurement circuit 15 of each auxiliary unit 10b is connected to the cells C in the battery module B by wirings 14. One ends of the respective wirings 14 at the battery module B side are preferably connected to one ends of the respective switches 26 of the cell selection circuit 25 at the battery module B side. As one example, in Fig. 2, the wirings 14, which branch off from the wirings 27 connected to the cells in the battery module B, are connected to the measurement circuit 15 of the auxiliary unit 10b.

The CPU 29 is electrically connected to the polarity selection circuit 21 via a line L3, electrically connected to the cell selection circuit 25 via a line L4, and electrically connected to the CPU 11 of the auxiliary unit 10b of the state monitoring apparatus 10 via a line L2.

The CPU 29 executes a program stored in a memory (not shown) according to signals from the CPU 11, thereby performing integrated control of the polarity selection circuit 21 and the cell selection circuit 25 (e.g., switching control of the switches 22 and the switches 26). The integrated control herein by the CPU 29, including the switching control of the switches 22 and 26, may be realized by using a conventional control technique.

<Non-contact charging device>

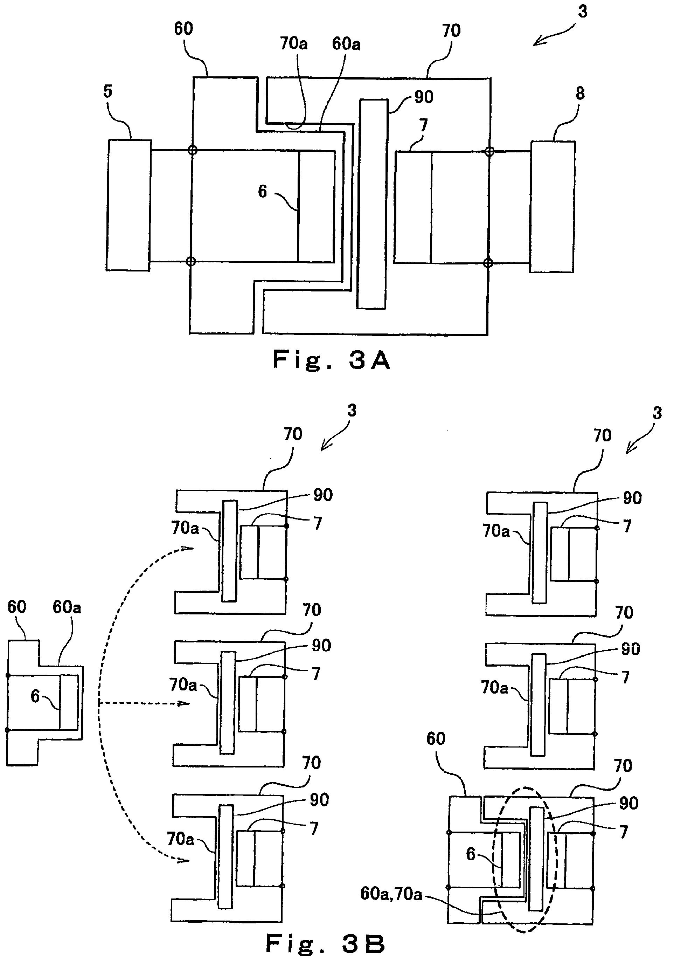

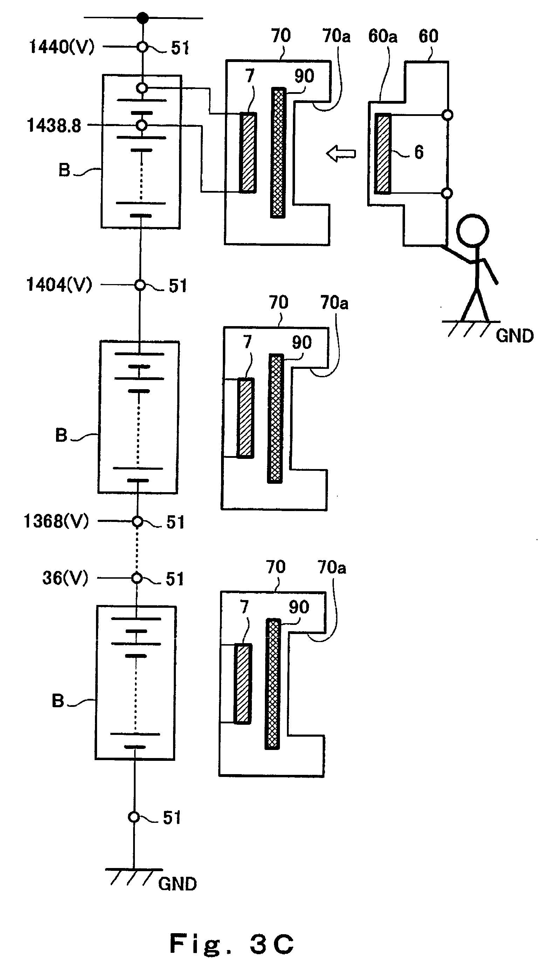

Fig. 3A, Fig. 3B, and Fig. 3C illustrate a structural example of a main part of the non-contact charging device according to the present invention, respectively.

The non-contact charging device 3 utilizes a technique of electromagnetically induced non-contact power transmission. A detailed description of the technique of electromagnetically induced non-contact power transmission is given below. In a case where the primary coil 6 of the power transmitting device 60 and the secondary coil 7 of the power receiving device 70 face each other in a manner to allow them to be electromagnetically coupled to each other, an alternating current is applied to the primary coil 6 and thereby a magnetic flux is generated. The magnetic flux generated by the primary coil 6 is linked with the secondary coil 7, and thereby an AC voltage is induced in the secondary coil 7. As a result, electric power is transmitted from the power transmitting device 60 to the power receiving device 70.

Further, as shown in Fig. 3A and Fig. 3B, the non-contact charging device 3 is configured such that the power transmitting device 60 at the primary side is detachable from the power receiving device 70 at the secondary side. That is, the power transmitting device 60 at the excitation side and the power receiving device 70 at the power-receiving side are separate components. When an operator performs inspection work on the battery module B or the battery stack S, the operator manually holds the power transmitting device 60, and positions the power transmitting device 60 and the power receiving device 70 so that the primary coil 6 and the secondary coil 7 can be electromagnetically coupled to each other. A positioning mechanism that facilitates such positioning is formed, for example, by a protrusion 60a formed on the power transmitting device 60 and a recess 70a formed in the power receiving device 70, the recess 70a allowing the protrusion 60a to fit therein. The protrusion 60a and the recess 70a are schematically shown in the drawings, and their specific configurations are variously conceivable. As one alternative, the protrusion may be formed on the power receiving device and the recess may be formed in the power transmitting device. The positioning mechanism may be configured in any manner, so long as the positioning mechanism is configured to allow the power transmitting device 60 to be detachably attached to the power receiving device 70, and to position the primary coil 6 and the secondary coil 7 such that the primary coil 6 and the secondary coil 7 are allowed to be electromagnetically coupled to each other when the power transmitting device 60 is attached to the power receiving device 70.

The above-described non-contact charging device 3 is adopted for the purpose of securing the insulation between the external power supply 4 and the battery module B and reducing the number of components forming the charging system 1.

First, a description of the securing of the insulation between the external power supply 4 and the battery module B is given.

Assume a case where the battery module B or the battery stack S is used in high-capacity power storage equipment of a railroad system or a natural energy power generation system. In this case, at the time of charging the cells C forming the battery module B or the battery stack S such that the charging is performed for each cell, it is necessary to take countermeasures against electric shock accidents caused by a ground fault (electric leakage). For example, in a case where the battery module B is used in power storage equipment of a railroad system, the terminal voltage of the battery module B is, in general, 1500 V. If the terminal voltage of each cell C forming the battery module B is, for example, 1.2 V, then the number of necessary cells C is 1250. In this case, when a cell having the lowest potential is to be charged, the voltage to ground of the cell does not need to be taken into account. However, when a cell having the highest potential is to be charged, the voltage to ground of the cell needs to be taken into account. For instance, in the example shown in Fig. 3C, the potentials at both ends of the highest-potential cell are 1440 (V) and 1438.8 (V), which are very high compared to the terminal voltage of a battery module for use in mobile devices or electric automobiles (which is in a range from tens of volts to hundreds of volts at the highest).

In the non-contact charging device 3, the primary coil 6 of the power transmitting device 60 and the secondary coil 7 of the power receiving device 70 are electrically separated from each other, and therefore, insulation can be readily obtained. That is, the necessity of taking account of the earth potential of each cell C forming the battery module B or the battery stack S is eliminated. Moreover, in the power receiving device 70, an insulator 90 is disposed between the secondary coil 7 and an air gap, and the air gap is formed between the primary coil 6 and the secondary coil 7. The insulator 90 is, for example, a high-voltage insulating film affixed to an acrylic sheet. The high-voltage insulating film is, for example, a polyethylene terephthalate (PET) film or a polyetherimide (PEI) film. Alternatively, a ceramic material or polymer material may be used as the insulator 90. Furthermore, various insulating materials are usable as the insulator 90 according to required dielectric strength. Accordingly, the dielectric strength can be readily adjusted as desired by suitably replacing the insulator 90 with another one chosen from among such various insulators 90. As a result, in the non-contact charging device 3, the insulation between the external power supply 4 and the battery module B can be secured sufficiently, and therefore, electric shock accidents due to a ground fault can be prevented. Next, a description of the reduction of the number of components of the charging system 1 is given.

The power transmitting device 60 is detachable from the power receiving device 70. Therefore, in a case where a plurality of battery modules B are connected in series to each other to form the battery stack S, it is necessary for the power receiving device 70 to be provided for each battery module B as shown in Fig. 3B; however, only one power transmitting device 60 is necessary for the entire battery stack S. Accordingly, the number of power transmitting devices 60 including the primary coil 6 and the number of excitation power supplies 5 can be reduced, which makes it possible to readily reduce the size and costs of the entire charging system 1.

The non-contact charging device 3 further includes the positioning mechanism configured to position the primary coil 6 and the secondary coil 7 such that the primary coil 6 and the secondary coil 7 are allowed to be electromagnetically coupled to each other when the power transmitting device 60 is attached to the power receiving device 70. As shown in Fig. 3A to Fig. 3C, the positioning mechanism is configured such that the external shape of the power transmitting device 60 is a protruding shape and the external shape of the power receiving device 70 is a recessed shape. Specifically, when the protrusion 60a of the power transmitting device 60 is fitted in the recess 70a of the power receiving device 70, the power transmitting device 60 is positioned relative to the power receiving device 70 such that the primary coil 6 and the secondary coil 7 are allowed to be electromagnetically coupled to each other. As a result, a magnetic flux generated by the primary coil 6 can be linked with the secondary coil 7 without waste, and the efficiency of power transmission from the power transmitting device 60 to the power receiving device 70 can be improved.

<Example of Charging Control by State Monitoring Apparatus>

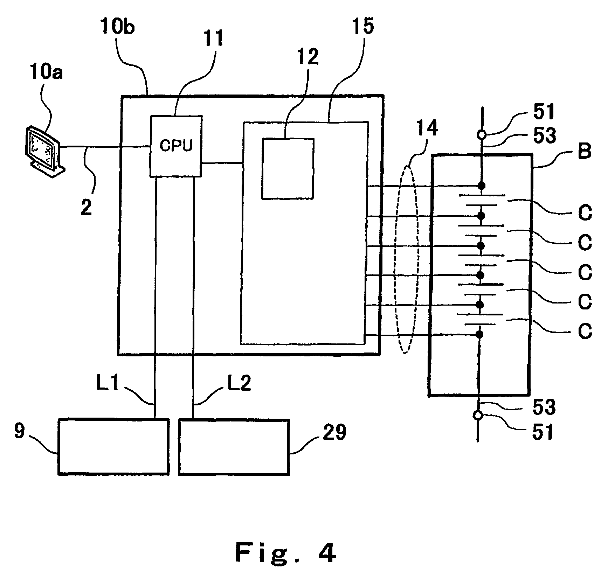

Fig. 4 shows an example of the configuration of the state monitoring apparatus 10. For the purpose of simplifying the drawing, the number of cells C forming the battery module B shown in Fig. 4 is five.

The measurement circuit 15 of the auxiliary unit 10b according to the present embodiment is configured to measure the terminal voltage of each cell C in the battery module B. To be specific, voltages of the respective cells C in the battery module B are applied to the measurement circuit 15 of the auxiliary unit 10b via the wirings 14. The voltages of the respective cells C applied to the measurement circuit 15 of the auxiliary unit 10b (i.e., analogue values) are sequentially subjected to A/D conversion by the A/D converter 12 at a particular cycle. After being subjected to the A/D conversion, the voltages of the respective cells C (i.e., digital values) are loaded into the CPU 11, and then transmitted to the main unit 10a via the communication line 2.

The CPU of the main unit 10a executes a program stored in the memory (not shown), thereby determining the state of charge of each cell C and whether the battery module B is operating normally in accordance with the voltage of each cell C, for example. The CPU of the main unit 10a is electrically connected to the charging control circuit 9 via the CPU 11 of the auxiliary unit 10b and a line L1, and is electrically connected to the CPU 29 via the CPU 11 of the auxiliary unit 10b and the line L2. The CPU of the main unit 10a executes the program stored in the memory, and thereby if the CPU of the main unit 10a determines that it is necessary to perform, for example, a charging start process of starting charging a cell C, a charging end process of ending the charging of a cell C, and a stop process of stopping the charging/discharging of the battery module B (e.g., an interlocking process), then the CPU of the main unit 10a transmits predetermined signals, such as a charging start signal, a charging end signal, and a charging/discharging stop signal, to the charging control circuit 9 and the CPU 29 via the CPU 11 of the auxiliary unit 10b. The charging control circuit 9 and the CPU 29 receive these signals and perform switching control of the switches 22 and 26, thereby performing a charging start process of starting charging a cell C, a charging end process of ending the charging of a cell C, and a stop process of stopping the charging/discharging of the battery module B.

Although the state monitoring apparatus 10 is configured to monitor the voltage of each cell C in the battery module B, the state monitoring apparatus 10 may be configured to monitor, for example, the temperature and pressure of each cell C in addition to the voltage of each cell C. In accordance with such data as the voltage, temperature, and pressure of each cell C received from the auxiliary unit 10b, the main unit 10a determines whether the battery module B is operating normally, in particular, determines the degree of failure in the battery module B. If the main unit 10a determines that a failure has occurred in the battery module B, the determination result is displayed on the display device of the main unit 10a to notify the operator of the failure. Further, if the main unit 10a determines that the degree of failure in the battery module B is serious, the aforementioned interlocking process is performed to automatically stop the entire charging system 1 or stop the charging/discharging of a battery module group in one line in the battery stack S.

It should be noted that, instead of adopting the configuration where the main unit 10a performs centralized control of the plurality of auxiliary units 10b, an alternative configuration may be adopted, in which no main unit 10a is provided and the plurality of auxiliary units 10b perform control independently of each other. In this case, the CPU 11 of each auxiliary unit 10b executes a program stored in a memory (not shown), and in accordance with the voltage of each cell C, the CPU 11 determines, for example, the state of charge of each cell C and whether the battery module B is operating normally. If the CPU 11 determines that it is necessary to perform, for example, a charging start process of starting charging a cell C, a charging end process of ending the charging of a cell C, and a stop process of stopping the charging/discharging of the battery module B, then the CPU 11 transmits predetermined signals to the charging control circuit 9 and the CPU 29.

<Example of Processing Flow When Inspection Work is Performed on Battery Stack>

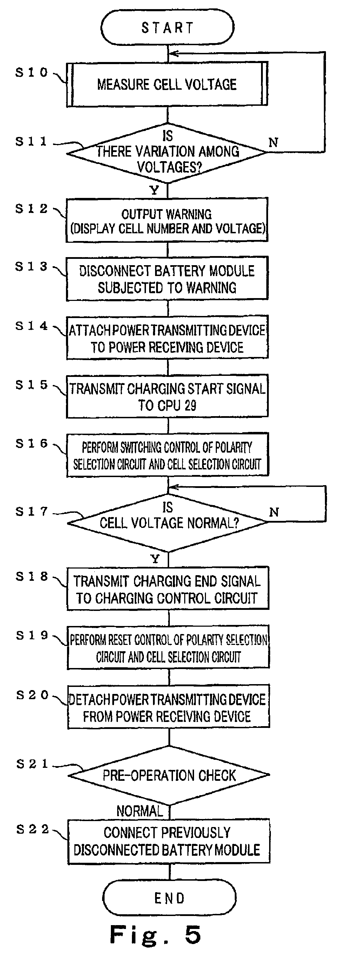

Fig. 5 is a flowchart showing an example of a processing flow when inspection work is performed on the battery stack S.

First, as a pre-charging preparation at a time of determining a poorly functioning cell, the state monitoring apparatus 10 (main unit 10a, auxiliary units 10b) measures, for each battery module B forming the battery stack S, the terminal voltage of each cell C forming the battery module B, and monitors the state of charge of each cell C according to the results of the measurement (step S10). It should be noted that the state of charge of each cell C is displayed on the display device of the main unit 10a. At the time, if the main unit 10a determines that there is a variation among the voltages (inter-terminal voltages) of the respective cells C (step S11: YES), the main unit 10a issues a warning and outputs the identification number and the measured voltage of a poorly functioning cell (step S12). It should be noted that a cell C from which the lowest voltage is measured is determined to be the poorly functioning cell.

An operator operates the breakers 54 connected to the respective stack output terminals 52 provided at both ends of the battery stack S, and disconnects the battery stack S from the system 1 in which the battery stack S is applied. Further, the operator removes, from module-connecting terminals 51 of the battery stack S, the positive electrode-side cable 53 and the negative electrode-side cable 53 of the battery module B including the poorly functioning cell for which the warning has been issued (step S13). It should be noted that since the power-transmitting side and the power-receiving side of the non-contact charging device 3 are insulated from each other as described above, it is not necessary to disconnect the breakers 54. However, it is preferred to disconnect the breakers 54 in consideration of safety.

When the above-described pre-charging preparation at a time of determining a poorly functioning cell is completed, the operator fits the protrusion of the power transmitting device 60 into the recess of the power receiving device 70, thereby attaching the power transmitting device 60 to the power receiving device 70. As a result, the primary coil 6 of the power transmitting device 60 and the secondary coil 7 of the power receiving device 70 are rendered into a state where the primary coil 6 and the secondary coil 7 can be electromagnetically coupled to each other. That is, in this state, a magnetic flux can be generated by applying an alternating current to the primary coil 6, and the magnetic flux generated by the primary coil 6 can be linked with the secondary coil 7 (step S14). In this state, the operator turns on the external power supply 4 to supply AC power from the external power supply 4 to the excitation power supply 5 of the power transmitting device 60.

The main unit 10a transmits a charging start signal to the CPU 29 and the charging control circuit 9 via the CPU 11 of the auxiliary unit 10b (step S 15). Upon receiving the charging start signal, the CPU 29 performs switching control of the switches 22 of the polarity selection circuit 21 and the switches 26 of the cell selection circuit 25 so that the poorly functioning cell can be charged (step S16). As a result, a charging current flows into the poorly functioning cell.

When the main unit 10a determines that the result of measuring the voltage of the poorly functioning cell has become normal due to the charging (step S17: YES), the main unit 10a transmits a charging end signal to the CPU 29 and the charging control circuit 9 via the CPU 11 of the auxiliary unit 10b (step S18). As a result, the charging of the poorly functioning cell is ended. Upon receiving the charging end signal, the CPU 29 performs reset control of turning off all of the switches 22 of the polarity selection circuit 21 and the switches 26 of the cell selection circuit 25 (step S 19).

The operator releases the fitted protrusion of the power transmitting device 60 from the recess of the power receiving device 70, thereby detaching the power transmitting device 60 from the power receiving device 70 (step S20). The operator performs pre-operation checks. If no abnormality is found in the pre-operation checks (step S21: NORMAL), the operator connects the positive electrode-side cable 53 and the negative electrode-side cable 53 of the battery module B, in which the cell C that has been charged in the inspection work at this time is included, to the respective module-connecting terminals 51 of the battery stack S, thereby connecting the battery module B again (step S22).

Although the charging of the poorly functioning cell is ended when the voltage measured from the poorly functioning cell has reached a desired voltage in step S 17, the charging of the poorly functioning cell may be ended at a different timing. The charging of the poorly functioning cell may be ended when the SOC of the poorly functioning cell has become equal to the SOC of the other cells C, or when charging for a predetermined power storage capacity has ended, or when a charging time specified in advance has elapsed, for example.

If the voltages of a plurality of cells have become relatively low among the cells C, the cell C of the lowest voltage is charged first. Thereafter, the other low-voltage cells C may be sequentially charged starting from the cell C of the second lowest voltage. If the cells C are sequentially charged in such a manner starting from a low-voltage cell, the variation among the voltages of the respective cells C in the battery module B is gradually eliminated, and voltage uniformity can be obtained among the cells C in the battery module B.

The above-described series of processes, except for the pre-operation checks (step S21), may be automated for the purpose of reducing the burden on the operator.

<Detailed Examples of Operations of Polarity Selection Circuit and Cell Selection Circuit>

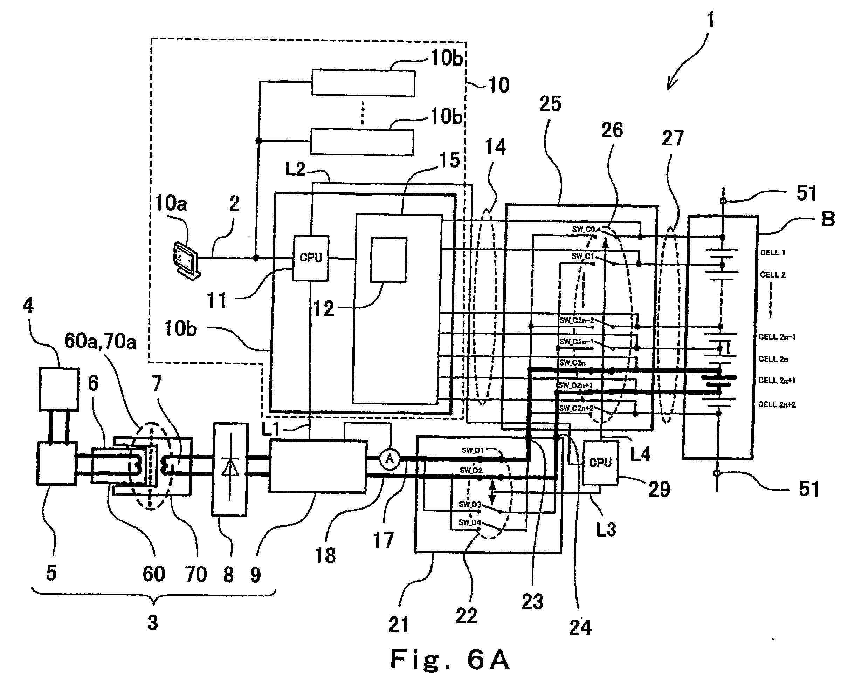

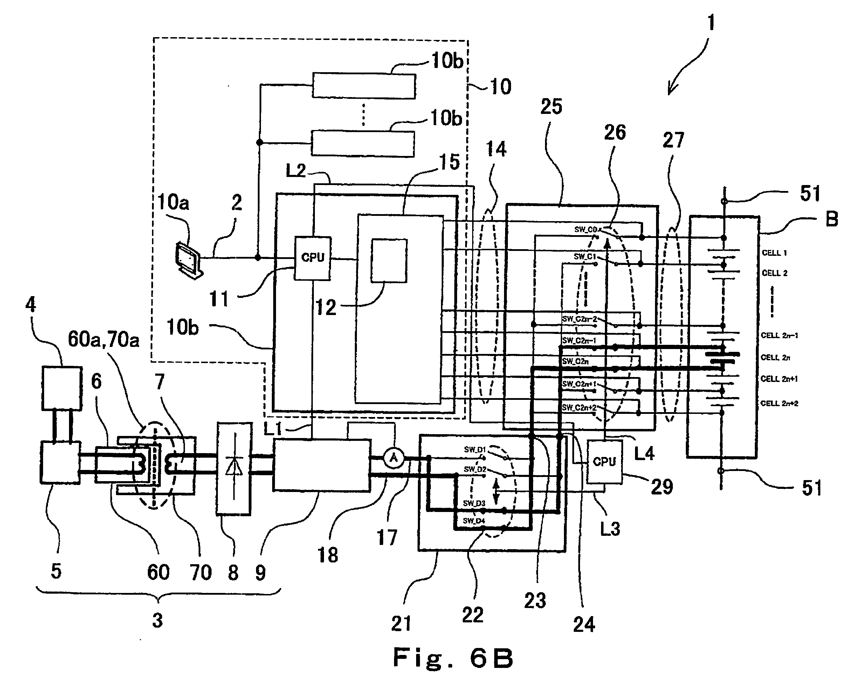

Hereinafter, detailed examples of operations of the polarity selection circuit 21 and the cell selection circuit 25 are described with reference to Fig. 6A and Fig. 6B. Fig. 6A shows a state of the entire charging system when the odd-numbered cell 2n+1 in the battery module B is charged, and Fig. 6B shows a state of the entire charging system when the even-numbered cell 2n in the battery module B is charged.

First, a description of a case where the voltage of the odd-numbered cell 2n+1 in the battery module B has become lower than the voltages of the other cells C in the battery module B is given.

The voltage of each cell C in the battery module B is transmitted to the auxiliary unit 10b and then to the main unit 10a, and displayed on the display device of the main unit 10a. When the main unit 10a automatically, or manually by the operator's selection operation, selects the odd-numbered cell 2n+1 (i.e., a poorly functioning cell or cell to be charged) whose voltage has lowered to the greatest degree among the cells C in the battery module B, the main unit 10a outputs a charging start signal for starting charging the selected odd-numbered cell 2n+1 to the CPU 29 and the charging control circuit 9 via the CPU 11 of the auxiliary unit 10b.

Upon receiving the charging start signal, the CPU 29 performs switching control of the polarity selection circuit 21 to turn on the switch SW_D1 and the switch SW_D2, and performs switching control of the cell selection circuit 25 to turn on the switch SW_C2n and the switch SW_C2n+1, which are connected to both ends of the odd-numbered cell 2n+1. At the time, as indicated by bold lines in Fig. 6A, a charging wiring path is formed to extend from the external power supply 4 to the odd-numbered cell 2n+1, and a charging current flows to the odd-numbered cell 2n+1 through the charging wiring path. As a result, charging of the odd-numbered cell 2n+1 is started. It should be noted that the charging wiring path from the charging control circuit 9 to the odd-numbered cell 2n+1 is formed to extend through the positive electrode side wiring 17 of the charging control circuit 9, the switch SW_D1, the first terminal 23 of the cell selection circuit 25, the switch SW_C2n, the odd-numbered cell 2n+1, the switch SW_C2n+1, the second terminal 24 of the cell selection circuit 25, the switch SW_D2, and the negative electrode side wiring 18 of the charging control circuit 9 in said order.

Next, a description of a case where the voltage of the even-numbered cell 2n in the battery module B has become lower than the voltages of the other cells C in the battery module B is given.

Similar to the case of the odd-numbered cell 2n+1, when the main unit 10a automatically, or manually by the operator's selection operation, selects the even-numbered cell 2n (i.e., a poorly functioning cell or cell to be charged) whose voltage has lowered to the greatest degree among the cells C in the battery module B, the main unit 10a transmits a charging start signal for starting charging the selected even-numbered cell 2n to the CPU 29 and the charging control circuit 9 via the CPU 11 of the auxiliary unit 10b.

In response, the CPU 29 performs switching control of the polarity selection circuit 21 to turn on the switch SW_D3 and the switch SW_D4, and performs switching control of the cell selection circuit 25 to turn on the switch SW_C2n-1 and the switch SW_C2n connected to both ends of the even-numbered cell 2n. At the time, as indicated by bold lines in Fig. 6B, a charging wiring path is formed to extend from the external power supply 4 to the even-numbered cell 2n, and a charging current flows to the even-numbered cell 2n through the charging wiring path. As a result, charging of the even-numbered cell 2n is started. It should be noted that the charging wiring path from the charging control circuit 9 to the even-numbered cell 2n is formed to extend through the positive electrode side wiring 17 of the charging control circuit 9, the switch SW_D3, the second terminal 24 of the cell selection circuit 25, the switch SW_C2n-1, the even-numbered cell 2n, the switch SW_C2n, the first terminal 23 of the cell selection circuit 25, the switch SW_D4, and the negative electrode side wiring 18 of the charging control circuit 9 in said order.

From the comparison between the bold-line part in Fig. 6A and the bold-line part in Fig. 6B, it is clear that the flow direction (polarity) of the current flowing through the wiring 27 between one end of the switch SW_C2n and the contact end between the even-numbered cell 2n and the odd-numbered cell 2n+1 is opposite between these two cases.

As described above, it is necessary for one set of the power receiving device 70, the rectifier 8, and the charging control circuit 9 to be installed for each battery module B. However, if one set of the polarity selection circuit 21 and the cell selection circuit 25 is installed, all the cells C in the battery module B can be set as cells to be charged. Consequently, although only one cell in the battery module B can be charged at one time, the costs of and the area occupied by equipment necessary for charging all the cells C in the battery module B can be suppressed, and thus space and cost saving can be realized. It should be noted that a plurality of power transmitting devices 60 may be used in the case of charging cells C in a plurality of battery modules B in the battery stack S.

<Example of Cell Measurement Voltage Correction Required Due to Partial Sharing of Wiring>

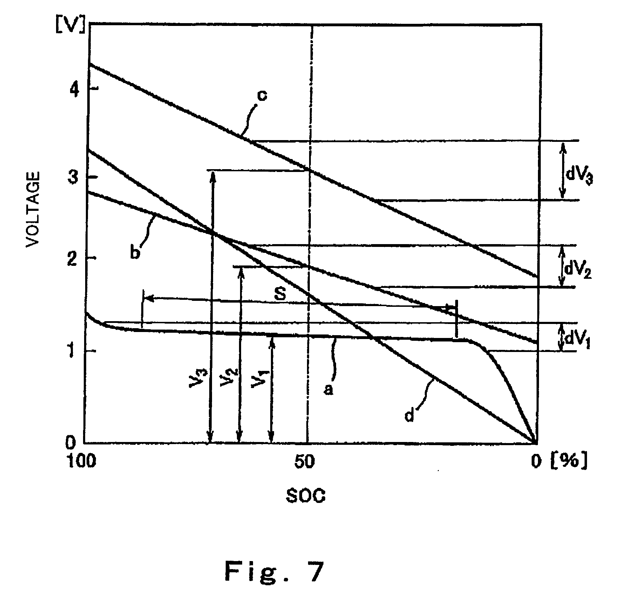

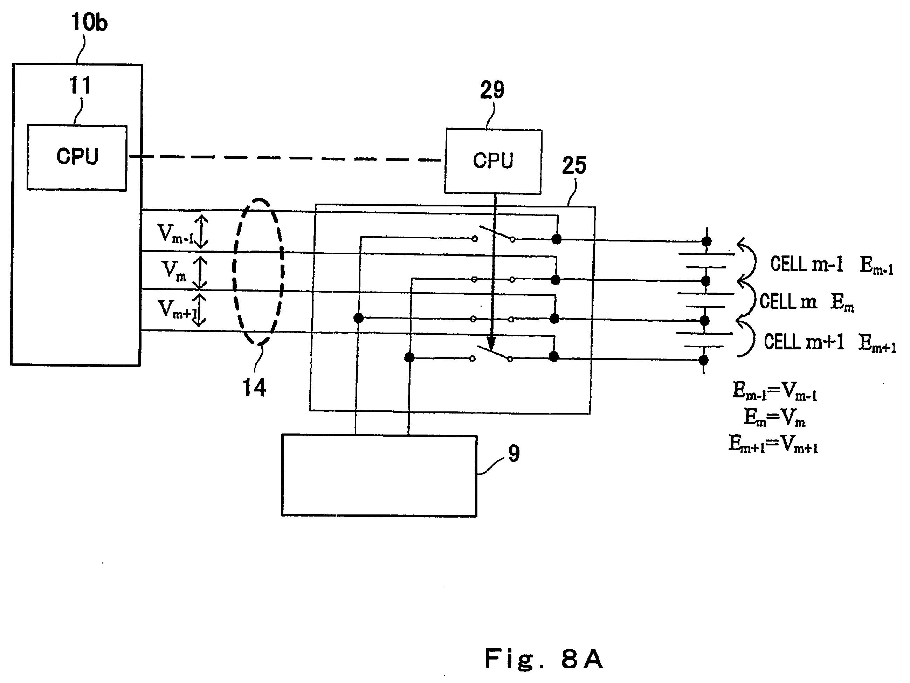

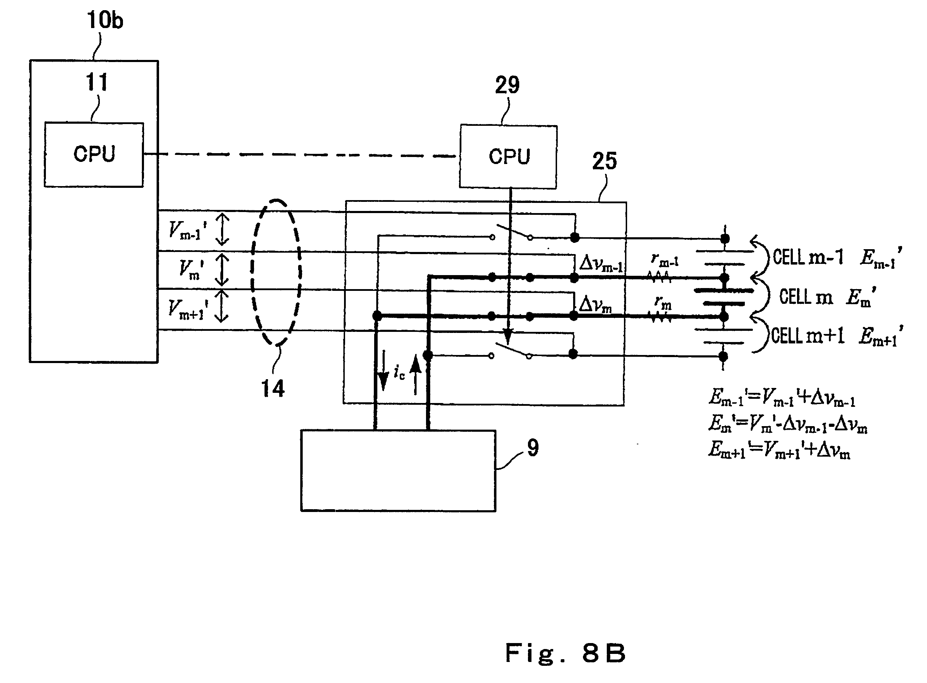

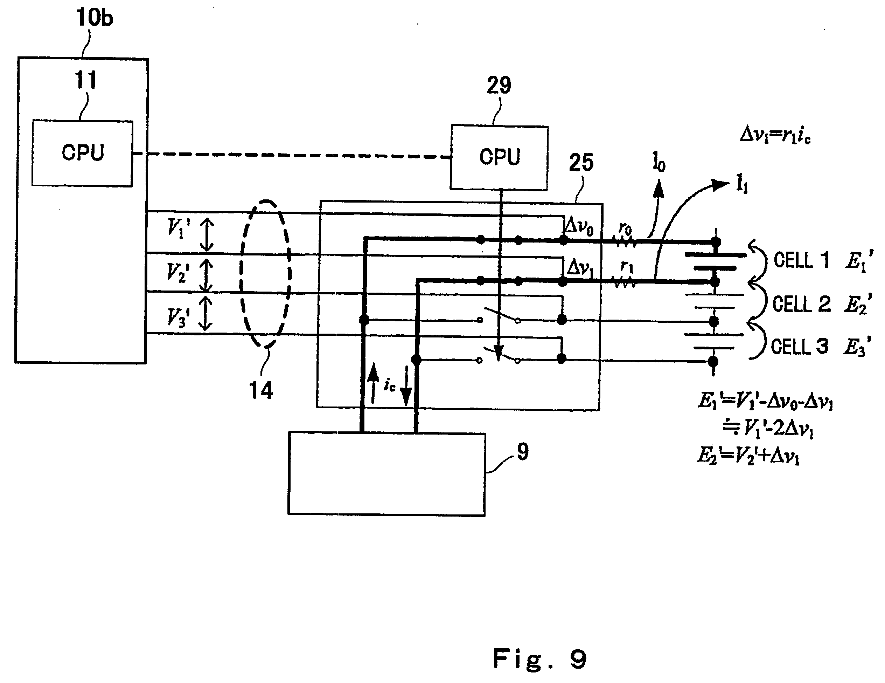

Hereinafter, a method of correcting the voltages of cells C, which is necessary since both the charging wirings for charging the cells C and voltage output paths for outputting the voltages of the cells C share the same wiring 17, is described with reference to Fig. 6A, Fig. 6B, Fig. 7, Fig. 8A, Fig. 8B, and Fig. 9. Fig. 7 is an SOC characteristic diagram showing voltage variations in different types of electrical storage devices relative to SOC. Fig. 8A illustrates a state of the cell selection circuit while charging of a cell m to be charged is stopped. Fig. 8B illustrates a state of the cell selection circuit while charging of the cell m to be charged is being performed. Fig. 9 illustrates a state of the cell selection circuit 25 when a cell 1 at one of both ends of the battery module B is charged.

In Fig. 6B, charging of the even-numbered cell 2n is being performed. At the time, a phenomenon occurs where the main unit 10a displays the voltage of the even-numbered cell 2n to be higher than its actual voltage, and displays the voltages of the cells (2n-1, 2n+1) adjacent to the even-numbered cell 2n to be lower than their actual voltages. This phenomenon occurs since the wiring 27 serving as charging wiring is also used as a voltage measurement path. To be specific, the phenomenon occurs when a charging current flows through the wiring 27 between the even-numbered cell 2n and a branching position at which the wiring 14 connected to the measurement circuit 15 branches off from the wiring 27, and the phenomenon occurs due to the electric resistance of the wiring 27. The main unit 10a is required to properly detect the voltage of the even-numbered cell 2n for charging control. However, while the even-numbered cell 2n is being charged, the voltage of the even-numbered cell 2n to be charged and the voltages of the cells (2n-1, 2n+1) adjacent to the even-numbered cell 2n cannot be measured precisely. This hinders proper charging control. The phenomenon similarly occurs in a case where the odd-numbered cell 2n+1 in Fig. 6A is charged.

In particular, a problem occurring in a case where a nickel-metal hydride battery is used as the cell C is discussed below with reference to Fig. 7. It should be noted that, in Fig. 7, Curve a represents a voltage variation in a nickel-metal hydride battery; Curve b represents a voltage variation in a lead battery; Curve c represents a voltage variation in a lithium ion battery; and Curve d represents a voltage variation in an electric double layer capacitor. A voltage variation relative to SOC variation ($\Delta V/\Delta SOC$) is approximately 0.1 in the case of a nickel-metal hydride battery, approximately 2 in the case of a lithium ion battery, and approximately 3 in the case of an electric double layer capacitor. Assuming here that the voltage variations in the respective cases are the same, then the SOC variation in a nickel-metal hydride battery is 20 times as great as the SOC variation in a lithium ion battery. Accordingly, in a case where a nickel-metal hydride battery is used as the cell C, even if the cell C indicates merely a slight variation of the end-of-charge voltage, the slight variation significantly affects the SOC variation in the cell C to a greater degree than in other cases where different types of secondary batteries are used as the cell C. For this reason, in order to charge the cell C up to a SOC of 100 % while preventing overcharging of the cell C, precise cell voltage measurement is necessary.

In view of this, a measurement voltage of the cell C is corrected by taking account of a voltage drop of the wiring 27 caused by a charging current, and thereby the voltage of the cell C is more precisely calculated while the cell C is being charged. Specifically, prior to the start of charging of a cell m to be charged (m is a cell number), voltages (Vm-1, Vm+1) of the cells (m-1, m+1) adjacent to the cell m that are measured by the auxiliary unit are stored in advance. Then, the voltages stored in advance, voltages (Vm-1', Vm+1') of the adjacent cells (m-1, m+1) measured by the auxiliary unit while the cell m to be charged is being charged, and their differences (Vm-1-Vm-1', Vm+1-Vm+1') are used to calculate voltage drops ($\Delta vm-1$, $\Delta vm$) of the wiring 27 connected to both electrodes of the cell m to be charged. By using the calculated voltage drops ($\Delta vm-1$, $\Delta vm$), the voltages (Vm-1, Vm+1) measured by the auxiliary unit are corrected, and thereby the voltage of the cell m to be charged is more precisely calculated. The correction method is described below in detail with reference to Fig. 8A and Fig. 8B.

As shown in Fig. 8A, while the charging of the cell m to be charged is stopped, no electric current flows from the cell m to be charged to the wiring of the auxiliary unit 10b. Therefore, as shown in the formulas below, a voltage Vm measured by the auxiliary unit 10b and a terminal voltage Em of the cell m to be charged are the same.

[Formulas 1]

$$Em\text{-}1 = Vm\text{-}1 \,\cdots\, (1\text{-}1)$$

$$Em = Vm \,\cdots\, (1\text{-}2)$$

$$Em\text{+}1 = Vm\text{+}1 \,\cdots\, (1\text{-}3)$$

On the other hand, as shown in Fig. 8B, when the charging of the cell m to be charged is started, an electric current flows from the cell m to be charged to the auxiliary unit 10b through the wiring 27. Accordingly, voltage drops ($\Delta vm-1$, $\Delta vm$) occur in the wiring 27, causing the voltage measured by the auxiliary unit 10b to vary. Such measurement voltage variation occurs in three cells in total: the cell m to be charged and its adjacent cells (m-1, m+1). Therefore, as shown in Fig. 8A, prior to the start of charging of the cell m to be charged, the voltages (Vm-1, Vm+1) of the adjacent cells (m-1, m+1) are measured and the measured voltages (Vm-1, Vm+1) are stored.

As shown in Fig. 8B, when the charging of the cell m to be charged is started, the voltages (Vm-1', Vm+1') of the adjacent cells (m-1, m+1) that are measured by the auxiliary unit decrease, and the voltage Vm' of the cell m to be charged that is measured by the auxiliary unit increases. Differences ΔVm-1 (=Vm-1-Vm-1') and ΔVm+1 (=Vm+1-Vm+1') are equal to the voltage drops (Δvm-1, Δvm) of the wiring 27 caused by the charging of the cell m to be charged. Here, it is inconceivable that the voltages of the adjacent cells (m-1, m+1) vary due to the charging of the cell m to be charged. Therefore, by using the voltages (Vm-1', Vm', Vm+1') of the cell m to be charged and the adjacent cells (m-1, m+1) that are measured by the auxiliary unit as well as the voltage drops (Δvm-1, Δvm) that occur during the charging in the wiring 27 connected to both electrodes of the cell m to be charged, precise voltages (Em-1', Em', Em+1') of the cell m to be charged and the adjacent cells (m-1, m+1) can be obtained in real time through calculation using formulas shown below.
[Formulas 2]

$$Em-1' \fallingdotseq Vm-1'+\Delta vm-1 \cdots (2-1)$$

$$Em' \fallingdotseq Vm'-\Delta vm-1-\Delta vm \cdots (2-2)$$

$$Em+1' \fallingdotseq Vm+1'+\Delta vm \cdots (2-3)$$

It should be noted that the voltage drops of the wiring 27 connected to both electrodes of the cell m to be charged may be calculated not only by using the differences between the voltages of the adjacent cells measured by the auxiliary unit prior to the charging and the voltages of the adjacent cells measured by the auxiliary unit during the charging, but also by using the product of an electrical resistance of the wiring and a charging current through the wiring.

Moreover, even in a case where the cell m to be charged is a cell at either one of both ends of the battery module B, the voltage of the cell m to be charged can be precisely calculated based on the above-described calculation method. To be specific, as shown in Fig. 9, a voltage drop Δv1 of the wiring 27 at the negative-electrode side of the cell 1 can be calculated in a manner similar to the above. However, a voltage drop Δv0 of the wiring 27 at the positive-electrode side of the cell 1 cannot be calculated by using the above-described calculation method due to the absence of an adjacent cell. Assuming here that a wiring length 10 from the cell selection circuit 25 to the positive electrode side of the cell 1 and a wiring length 11 from the cell selection circuit 25 to the negative electrode side of the cell 1 satisfy a relationship of 10≒11, and that their electrical resistances r0 and r1 are equal, then a formula shown below holds true since charging currents ic through the wiring are the same.
[Formula 3]

$$\Delta vo \fallingdotseq \Delta v1 \cdots (3)$$

Therefore, in a case where the cell m to be charged is a cell C at either one of both ends of the battery module B, the voltage of the cell C can be precisely calculated in real time by using formulas shown below. As a result, proper charging control can be realized.
[Formula 4]

$$E1' = V1'-\Delta v0-\Delta v1$$
$$\fallingdotseq V1'-2\Delta v1 \cdots (4-1)$$

$$E2' = V2'+\Delta v1 \cdots (4-2)$$

It should be noted that if the electric resistance r of the wiring 27 is 0.04 (Ω) and the charging current ic is 3 (A), then a voltage drop Δv of the wiring 27 is 0.12 (V). If a nickel-metal hydride battery having a terminal voltage of 1.2 V is used as the cell C, the voltage drop Δv of 0.12 (V) is 10 % of the terminal voltage. As described above with reference to Fig. 7, voltage variation in a nickel-metal hydride battery is less than in other types of electrical storage devices, and even a slight voltage measurement error affects the charging control significantly. In particular, if charging is performed exceeding 10 % of a predetermined voltage of a battery, the battery becomes overcharged and damaged. Even if the battery does not become damaged, repeatedly performed overcharging might negatively affect the life of the battery. Therefore, the voltage of the cell C may be precisely calculated in real-time in the above-described manner, which makes it possible to realize proper charging control of various electrical storage devices, preferably secondary batteries, more preferably a nickel-metal hydride battery.

It should be noted that the calculation for correcting the measurement voltage of the cell C can be realized by various means. As one example, the voltage of the cell C, which is applied to the auxiliary unit 10b via the wiring 14, may be corrected by using a control circuit included in the measurement circuit 15, the control circuit being configured to perform the above-described correction calculation. For example, a DSP (Digital Signal Processor) optimized for performing in real time the calculation for correcting the voltage of the cell C obtained via the A/D converter 12 may be used as the control circuit. Alternatively, a program for performing the above correction calculation may be stored in a memory (not shown), and the voltage of the cell C obtained by the CPU 11 via the A/D converter 12 may be temporarily stored in the memory. Then, the calculation for correcting the voltage of the cell C may be performed by executing the program. The calculation for correcting the voltage of the cell C may be performed not only by the CPU 11 of the auxiliary unit 10b but by the CPU of the main unit 10a.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The invention is defined by the features of the appended claims.

**Industrial Applicability**

The present invention is useful as a charging system configured to charge a battery module in which a plurality of cells are connected in series to each other, and particularly as a charging system configured to charge a plurality of cells forming a battery module such that the charging is performed for each cell.

Reference Signs List

| C | cell |
|---|---|
| B | battery module |
| S | battery stack |
| 51 | module-connecting terminal |
| 52 | stack output terminal |
| 53 | cable |
| 54 | breaker |
| 1 | battery module charging system |
| 2 | communication line |
| 3 | non-contact charging device |
| 4 | external power supply |
| 5 | excitation power supply |
| 6 | primary coil |
| 60 | power transmitting device |
| 60a | protrusion |
| 7 | secondary coil |
| 70 | power receiving device |
| 70a | recess |
| 90 | insulator |
| 8 | rectifier |
| 9 | charging control circuit |
| 10 | state monitoring apparatus |
| 10a | main unit |
| 10b | auxiliary unit |
| 11 | CPU |
| 12 | A/D converter |
| 14 | wiring |
| 15 | measurement circuit |
| 17 | positive electrode-side wiring |
| 18 | negative electrode-side wiring |
| 21 | polarity selection circuit |
| 22 | switch |
| 23 | first terminal |
| 24 | second terminal |
| 25 | cell selection circuit |
| 26 | switch |
| 27 | wiring |
| 29 | CPU |

**Claims**

1. A battery module charging system (1) comprising:

a power transmitting device (60) including a primary coil (6), the primary coil being configured to transmit AC power;
a power receiving unit (70, 8) including a secondary coil (7), the secondary coil being configured to receive the AC power transmitted from the primary coil by electromagnetic induction, the power receiving unit being configured to convert the received AC power into DC power; and
a selection circuitry (21, 25, 29) for use in selectively charging a plurality of cells (C) in a battery module (B) with the DC power, the plurality of cells in the battery module being connected in series to each other, the plurality of cells being secondary batteries;
a plurality of charging wirings (17, 18) for use in charging the plurality of respective cells in the battery module, the plurality of charging wiring extending from the selection circuitry;
a state monitoring apparatus (10) configured to monitor state signals, each of the state signals indicating a state of one of the plurality of cells in the battery module;
a plurality of signal wirings (14,27) extending from the plurality of respective cells in the battery module to the state monitoring apparatus, the state signals being transmitted to the state monitoring apparatus through the plurality of respective signal wirings; and
a charging control circuit (9) disposed between the power receiving unit and the selection circuitry,
a positioning mechanism (60a, 70a) is configured to allow the power transmitting device to be detachably attached to the power receiving unit, and to position the primary coil and the secondary coil such that the primary coil and the secondary coil are allowed to be electromagnetically coupled to each other when the power transmitting device is attached to the power receiving unit;
**characterized in that**

the selection circuitry is configured to select one of the plurality of cells in the battery module and charge the selected cell with the DC power, the charging control circuit is configured to control a start and an end of charging of the one of the plurality of cells in accordance with the state signal, the state signal being monitored by the state monitoring apparatus, the plurality of charging wirings are respectively connected to the selection circuitry and non-end portions of the plurality of signal wirings; and a charging current flowing to each cell flows through a portion of the signal wiring (27), the portion of the signal wiring extending between the cell and the connected non-end portion of the signal wiring.

2. The battery module charging system (1) according to claim 1, wherein
a plurality of the battery modules (B) are connected in series to each other, each of the battery modules includes the power receiving unit (70, 8), the positioning mechanism (60a, 70a), and the selection circuitry (21, 25, 29), and
the battery module charging system includes the single power transmitting device (60) for the plurality of the battery modules.

3. The battery module charging system (1) according to claim 1, wherein
the power receiving unit (70) includes an insulator (90) disposed between the secondary coil (7) and an air gap, the air gap being formed between the primary coil (6) and the secondary coil.

4. The battery module charging system (1) according to claim 1, further comprising
a correction circuit (15) configured to correct a terminal voltage of each of the cells (C) in accordance with a voltage drop, the terminal voltage of each of the cells being transmitted to the state monitoring apparatus (10) as the state signal, the voltage drop occurring when the charging current flowing to each cell flows through the portion of the signal wiring (27).

5. The battery module charging system (1) according to any one of claims 1 to 4, wherein the cells (C) are nickel-metal hydride batteries.

**Patentansprüche**

1. Batteriemodulladesystem (1), umfassend:

eine Stromübertragungsvorrichtung (60), enthaltend eine Primärspule (6), wobei die Primärspule eingestellt ist, Wechselstrom zu übertragen;

eine Stromempfangseinheit (70, 8), enthaltend eine Sekundärspule (7), wobei die Sekundärspule eingestellt ist, den Wechselstrom, welcher von der Primärspule durch elektromagnetische Induktion übertragen wird, zu empfangen, wobei die Stromempfangseinheit eingestellt ist, den empfangenen Wechselstrom in Gleichstrom umzuwandeln; und

einen Auswahlschaltkreis (21, 25, 29) zur Verwendung beim selektiven Laden mehrerer Zellen (C) in einem Batteriemodul (B) mit dem Gleichstrom, wobei die mehreren Zellen im Batteriemodul in Reihe miteinander verbunden sind, wobei die mehreren Zellen Sekundärbatterien sind;

mehrere Ladeverkabelungen (17, 18) zur Verwendung beim Laden der mehreren jeweiligen Zellen im Batteriemodul, wobei sich die mehreren Ladeverkabelungen vom Auswahlschaltkreis aus erstrecken;

ein Zustandsüberwachungsgerät (10), eingestellt, Zustandssignale zu überwachen, wobei jedes der Zustandssignale einen Zustand einer der mehreren Zellen im Batteriemodul anzeigt;

mehrere Signalverkabelungen (14, 27), welche sich von den mehreren jeweiligen Zellen im Batteriemodul zum Zustandsüberwachungsgerät erstrecken, wobei die Zustandssignale durch die mehreren jeweiligen Signalverkabelungen an das Zustandsüberwachungsgerät übertragen werden; und

einen Steuerschaltkreis (9), angeordnet zwischen der Stromempfangseinheit und dem Auswahlschaltkreis,

einen Positionierungsmechanismus (60a, 70a), eingestellt, der Stromübertragungsvorrichtung zu gestatten, abnehmbar an der Stromempfangseinheit angebracht zu sein, und die Primärspule und die Sekundärspule zu positionieren, sodass die Primärspule und die Sekundärspule elektromagnetisch aneinandergekoppelt werden können, wenn die Stromübertragungsvorrichtung an der Stromempfangseinheit angebracht ist;

**dadurch gekennzeichnet, dass** der Auswahlschaltkreis eingestellt ist, eine der mehreren Zellen im Batteriemodul auszuwählen und die gewählte Zelle mit dem Gleichstrom zu laden,

dass der Ladesteuerschaltkreis eingestellt ist, einen Beginn und ein Ende vom Laden der einen der mehreren Zellen in Übereinstimmung mit dem Zustandssignal zu steuern, wobei das Zustandssignal durch das Zustandsüberwachungsgerät überwacht ist,

dass die mehreren Ladeverkabelungen mit dem Auswahlschaltkreis bzw. den Nicht-Endabschnitten der mehreren Signalverkabelungen verbunden sind; und

dass ein Ladestrom, welcher zu jeder Zelle fließt, durch einen Abschnitt der Signalverkabelung (27) fließt, wobei sich der Abschnitt der Signalverkabelung zwischen der Zelle und den verbundenen Nicht-Endabschnitten der Signalverkabelung erstreckt.

2. Batteriemodulladesystem (1) nach Anspruch 1, wobei

mehrere Batteriemodule (B) in Reihe miteinander verbunden sind,

jedes der Batterielademodule die Stromempfangseinheit (70, 8), den Positionierungsmechanismus (60a, 70a) und den Auswahlschaltkreis (21,25, 29) enthält, und

das Batteriemodulladesystem die einzelne Stromübertragungsvorrichtung (60) für die mehreren Batteriemodule enthält.

3. Batteriemodulladesystem (1) nach Anspruch 1, wobei

die Stromempfangseinheit (70) einen Isolator (90) enthält, welcher zwischen der Sekundärspule (7) und einem Luftspalt angebracht ist, wobei der Luftspalt zwischen der Primärspule (6) und der Sekundärspule gebildet ist.

4. Batteriemodulladesystem (1) nach Anspruch 1, des Weiteren umfassend

einen Korrekturschaltkreis (15), welcher eingestellt ist, eine Anschlussspannung von jeder der Zellen (C) in Übereinstimmung mit einem Spannungsabfall zu korrigieren, wobei die Anschlussspannung von jeder der Zellen zum Zustandsüberwachungsgerät (10) als das Zustandssignal übertragen wird, wobei der Spannungsabfall auftritt, wenn der Ladestrom, welcher zu jeder Zelle fließt, durch den Abschnitt der Signalverkabelung (27) fließt.

5. Batteriemodulladesystem (1) nach einem der Ansprüche 1 bis 4, wobei die Zellen (C) Nickel-Metallhydrid-Batterien sind.

## Revendications

1. Système de chargement de modules d'accumulateur (1) comprenant :

un dispositif de transmission d'énergie (60) comprenant un enroulement primaire (6), l'enroulement primaire étant configuré pour transmettre de l'énergie CA ;

une unité réceptrice d'énergie (70, 8) comprenant un enroulement secondaire (7), l'enroulement secondaire étant configuré pour recevoir l'énergie CA transmise depuis l'enroulement primaire par induction électromagnétique, l'unité réceptrice d'énergie étant configurée pour convertir l'énergie CA reçue en énergie CC ; et

une circuiterie de sélection (21, 25, 29) pour utilisation dans le chargement sélectif d'une pluralité d'éléments (C) d'un module d'accumulateur (B) avec l'énergie CC, la pluralité d'éléments du module d'accumulateur étant connectés en série les uns avec les autres, la pluralité d'éléments étant des batteries secondaires ;

une pluralité de câblages de chargement (17, 18) pour utilisation dans le chargement de la pluralité d'éléments respectifs dans le module d'accumulateur, la pluralité de câblages de chargement s'étendant depuis la circuiterie de sélection ;

un appareil de contrôle d'état (10) configuré pour contrôler des signaux d'état, chacun des signaux d'état indiquant l'état d'un de la pluralité d'éléments dans le module d'accumulateur ;

une pluralité de câbles de signaux (14, 27) s'étendant de la pluralité d'éléments respectifs du module d'accumulateur à l'appareil de contrôle d'état, les signaux d'état étant transmis à l'appareil de contrôle d'état via la pluralité de câblages de signaux respectifs ; et

un circuit de commande de chargement (9) disposé entre l'unité réceptrice d'énergie et la circuiterie de sélection,

un mécanisme de positionnement (60a, 70a) configuré pour permettre au dispositif de transmission d'énergie d'être fixé de manière détachable à l'unité réceptrice d'énergie et positionner l'enroulement primaire et l'enroulement secondaire de sorte que l'enroulement primaire et l'enroulement secondaire soient autorisés à se coupler l'un à l'autre par voie électromagnétique lorsque le dispositif de transmission d'énergie est fixé à l'unité réceptrice d'énergie ;

**caractérisé en ce que** :

la circuiterie de sélection est configurée pour sélectionner l'un de la pluralité d'éléments du module d'accumulateur et charger l'élément choisi en énergie CC,

le circuit de commande de chargement est configuré pour commander le début et la fin du chargement de l'un de la pluralité d'éléments conformément au signal d'état, le signal d'état étant contrôlé par l'appareil de contrôle d'état,

la pluralité de câblages de chargement sont respectivement connectés à la circuiterie de sélection et aux parties non terminales de la pluralité de câblages de signaux ; et

un courant de chargement s'écoulant vers chaque élément s'écoule à travers une partie du câblage de signal (27), la partie du câblage de signal s'étendant entre l'élément et la partie non terminale connectée du câblage de signal.

2. Système de chargement de modules d'accumulateur (1) selon la revendication 1, dans lequel :

une pluralité des modules d'accumulateur (B) sont connectés en série les uns aux autres, chacun des modules d'accumulateur comprend l'unité réceptrice d'énergie (70, 8), le mécanisme de positionnement (60a, 70a) et la circuiterie de sélection (21, 25, 29) et le système de chargement de modules d'accumulateur comprend le seul dispositif de transmission d'énergie (60) pour la pluralité des modules d'accumulateur.

3. Système de chargement de modules d'accumulateur (1) selon la revendication 1, dans lequel :

l'unité réceptrice d'énergie (70) comprend un isolant (90) disposé entre l'enroulement secondaire (7) et un espace d'air, l'espace d'air étant formé entre l'enroulement primaire (6) et l'enroulement secondaire.

4. Système de chargement de modules d'accumulateur (1) selon la revendication 1, comprenant en outre :

un circuit de correction (15) configuré pour corriger une tension terminale de chacun des éléments (C) en fonction d'une chute de tension, la tension aux bornes de chacun des éléments étant transmise à l'appareil de contrôle d'état (10) comme signal d'état, la chute de tension se produisant lorsque le courant de chargement s'écoulant vers chaque élément s'écoule à travers la partie du câblage de signal (27).

5. Système de chargement de modules d'accumulateur (1) selon l'une quelconque des revendications 1 à 4, dans lequel les éléments (C) sont des batteries de nickel-hydrure de métal.

Fig. 1A

Fig. 1B

Fig. 2

Fig. 3A

Fig. 3B

Fig. 3C

Fig. 4

Fig. 5

Fig. 6A

Fig. 6B

Fig. 7

EP 2 660 947 B1

Fig. 8A

$E_{m-1}=V_{m-1}$

$E_m=V_m$

$E_{m+1}=V_{m+1}$

CELL m-1  $E_{m-1}{}'$

CELL m  $E_m{}'$

CELL m+1  $E_{m+1}{}'$

$E_{m-1}{}'=V_{m-1}{}'+\Delta v_{m-1}$
$E_m{}'=V_m{}'-\Delta v_{m-1}-\Delta v_m$
$E_{m+1}{}'=V_{m+1}{}'+\Delta v_m$

Fig. 8B

EP 2 660 947 B1

Fig. 9

$\Delta v_1 = r_1 i_c$

$E_1' = V_1' - \Delta v_0 - \Delta v_1$
$\doteqdot V_1' - 2\Delta v_1$
$E_2' \doteqdot V_2' + \Delta v_1$

EP 2 660 947 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070145946 A1
- US 5656915 A
- US 5631537 A
- JP 2005534276 W
- JP 2005151720 A
- JP 2010206871 A
- JP 10257682 A